# EUROPEAN PATENT SPECIFICATION

(11) **EP 2 445 235 B1**
(45) Date of publication and mention of the grant of the patent: **11.07.2018**
(21) Application number: 10777342.6
(22) Date of filing: 10.05.2010
(51) Int. Cl.: H04W 4/14, H04W 24/00, H04W 76/02, H04W 76/06, H04W 4/00

(54) **SHORT MESSAGE NETWORK MANAGEMENT REALIZING METHOD, SYSTEM AND DEVICE**
VERFAHREN, SYSTEM UND VORRICHTUNG FÜR KURZNACHRICHTEN-NETZWERKMANAGEMENT
PROCÉDÉ, SYSTÈME ET DISPOSITIF DE RÉALISATION DE LA GESTION D'UN RÉSEAU DE MESSAGE COURT

(30) Priority: 22.05.2009 CN 200910202970
(43) Date of publication of application: 25.04.2012
(73) Proprietor: ZTE Corporation, Shenzhen, Guangdong 518057 (CN)
(72) Inventor: WEN, Yongming, Shenzhen Guangdong 518057 (CN)
(74) Representative: Schröer, Gernot H.
(86) International application number: PCT/CN2010/072569
(87) International publication number: WO 2010/133139

(56) References cited:
- WO-A1-2007/125172
- CN-A- 1 756 161
- CN-A- 1 992 924
- CN-A- 101 562 798
- US-A1- 2006 229 066
- US-A9- 2008 233 942
- VOUGIOUKAS S ET AL: "A system for basic-level network fault management based on the GSM short message service (SMS)", EUROCON'2001, TRENDS IN COMMUNICATIONS, INTERNATIONAL CONFERENCE ON. JUL. 4-7, 2001, PISCATAWAY, NJ, USA,IEEE, 4 July 2001 (2001-07-04), pages 218-222, XP032155555, DOI: 10.1109/EURCON.2001.937799 ISBN: 978-0-7803-6490-5

## Description

### Technical Field

The present invention relates to the communication field, and particularly, to a method, system and apparatus for implementing short message network management.

### Background of the Related Art

In the wireless communication network, because of the occurrence of the cases such as the network update and the changes of parameter configurations and so on, the operators often have to carry out the inquiring and update management on a plurality of key parameters stored in the wireless terminal. A most direct method is to notify the terminal user to carry out the update in the operators' business hall or client service department. However, this method wastes time and energy, and is unable to ensure that all the users go to the business hall or the client service department to carry out the update.

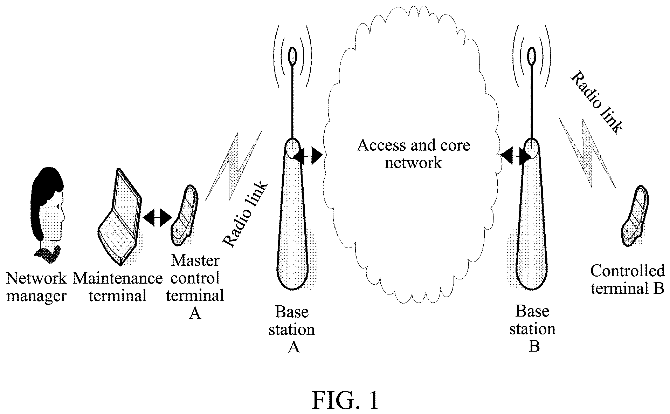

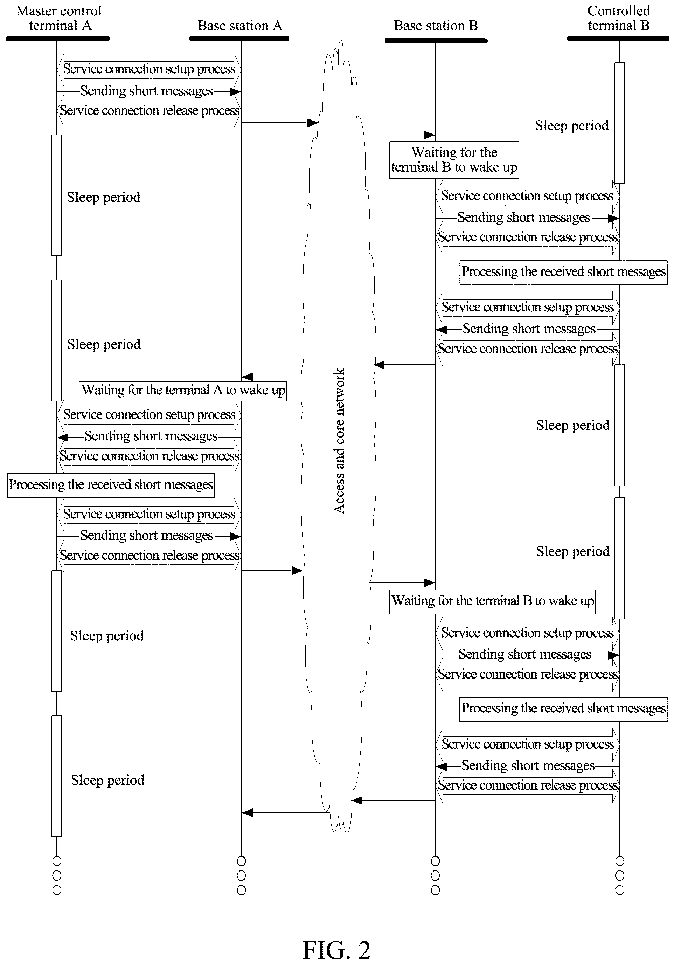

The short message network management is a method used by the operators to manage the terminals at present. As shown in FIG. 1 and FIG. 2, the working principle of this method is generally as follows: the operators taking one terminal as a master control terminal for the short message network management, and sending the short messages of the particular formats to the other terminals which need to be managed in sequence. These short messages of the particular formats are used for the master terminal to carry out operations such as inquiring parameters and updating parameters and so on to the other common terminal. These short messages of the particular formats should be agreed in advance by the master control terminal and the other terminals, that is, the communication protocol should be determined in advance. The other terminals carry out processes according to the requirement and make the response after receiving the short messages, and said processes include reporting parameters and updating parameters, and so on.

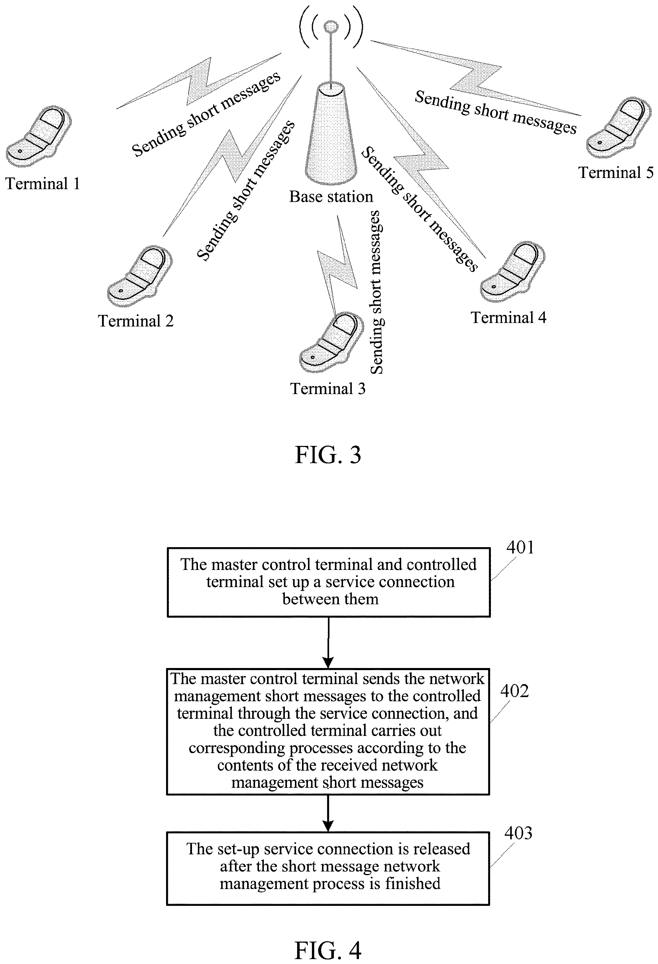

The short message network management is flexible and convenient in the practical application, and costs less, and thus is applied widely. However, this method has its own drawbacks:
1. Worse security. The short messages in the short message network management generally include data information related to the key parameters of the terminal normal working, and the network operators generally do not wish that the short messages in the short message network management are illegally monitored or tampered by the other users. As shown in FIG. 3, in the practical application of the short message network management, if the length of a short message is shorter, then the short message may be sent through the common channel, for example, the paging channel or the access channel, which will cause that the short message is detected by all the terminals served by this common channel, and thus the short message may be monitored.
2. Worse real-time. In order to save the power, almost all the practically used terminals adopt the sleep mode at present. Said sleep mode refers that if the terminal is idle after locking to the network, then the terminal closes the radio frequency receiver and transmitter for most times and enters into the sleep state. In the sleep state, the terminal is unable to be paged by the base station. After sleeping for a period of time, the terminal wakes up and turns on the radio frequency receiver, monitors whether the base station is paging the terminal for the coming of the service data, and updates the network configuration parameters, and so on. If the base station pages the terminal, then the terminal is able to respond at this time, and sets up the service connection with the base station, or the terminal will keep on sleeping. The time when the terminal wakes up every time should be negotiated with the base station before the terminal enters the sleep mode, and thus the base station can know when the terminal wakes up in advance, and send the service data to the terminal when the terminal wakes up. The sleep duration between every two wakeup times is called the sleep period, and the sleep period is a negotiable parameter between the terminal and the base station, which should be compromised between the effect of saving power and the real-time. The longer the sleep period is, and the less the times of the terminal waking up are, the better the effect of saving power is, however when this terminal has a coming service, the base station has to wait for a longer time for the terminal to wake up, and then the base station is able to send the service to the terminal, and thus the real-time is worse. Conversely, the shorter the sleep period is, the worse the effect of saving power is, but the better the real-time is. For example, in the CDMA2000 system, the sleep period is between 1.28 seconds to 163.84 seconds. In practical, most networks adopt 1.28 seconds or 2.56 seconds. Thus when there is a coming short message, in the worst case, the base station needs to wait for about 1.2 seconds or 2.5 seconds until the terminal wakes up, and then the base station is able to transmit the short message through the paging channel or page the terminal to start to set up the service connection.

If the traditional short message network management method is adopted, every time a short message is coming, the base station has to wait for the terminal to wake up from the sleep state at first, and then the base station is able to send the short message to the terminal. The waiting time for the short message every time is at the second level. Since one short message network management process needs many short messages interacting, thus the accumulated time of a plurality of waiting times will be very large. Besides, the operators adopt the short message network management always regarding to mass users, thus the short message network management of the mass users for one time will be very long, therefore the duration of the short message network management process for one terminal will be very long and the real-time is worse.

US 2008/233942 A9 (JONG-HWAN) provides a system and method for remotely controlling a mobile terminal in a mobile communication system. The mobile terminal receives a control command through a call link and performs an operation according to the received control command. An Internet service provider including a remote control emulator transmits a mobile terminal remote control command to the mobile terminal through the call link, upon receipt of the mobile terminal remote control command through a user interface of the remote control emulator.

In the non-patent document, VOUGIOUKAS S ET AL: "A system for basic-level network fault management based on the GSM short message service (SMS)", EUROCON'2001, TRENDS IN COMMUNICATIONS, INTERNATIONAL CONFERENCE ON. JUL. 4-7, 2001, PISCATAWAY, NJ, USA,IEEE, 4 July 2001 (2001-07-04), pages 218-222, XP032155555, DOI: 10.1109/ EURCON.2001.937799, ISBN: 978-0-7803-6490-5, it describes the design and implementation of a distributed system, which uses the wireless GSM Short Message Service (SMS) data transfer technology, in order to give network managers access to services on remote network equipment via a cellular phone. The document develops a multi-user, multi-session, two-way network management system via SMS.

### Summary of the Invention

The present invention provides a method and system for implementing short message network management, which is used to overcome the problem of bad security and real-time of the short message network management in the prior art.

The features of the method and system according to the present invention are defined in the independent claims, and the preferable features according to the present invention are defined in the dependent claims.

A method for implementing short message network management comprises:
- A master control terminal and a controlled terminal setting up a service connection between them in carrying out a short message network management process;
- the master control terminal sending network management short messages to the controlled terminal through the service connection; and
- the controlled terminal carrying out corresponding processes according to contents of the received network management short messages.

Wherein after the step of the controlled terminal carrying out corresponding processes according to contents of the received network management short messages, the method further comprises:
- the controlled terminal returning a response short message to the master control terminal through the service connection.

In the step of the master control terminal sending network management short messages to the controlled terminal through the service connection, the master control terminal sends the network management short messages a plurality of times to the controlled terminal through the service connection.

The method further comprises: releasing the service connection after the short message network management process is finished.

Wherein the step of a master control terminal and a controlled terminal setting up a service connection between them comprises:
- the master control terminal actively initiating a calling request to the controlled terminal; and
- after the controlled terminal receiving the calling request, if it is determined that the calling request is initiated by the master control terminal, then the controlled terminal returning a calling response to the master control terminal to accomplish setup of the service connection.

The method further comprises: the controlled terminal determining whether the calling request is initiated by the master control terminal according to a stored master control number or pre-stored strategies.

When the master control terminal has stored a master control number, in the step of a master control terminal and a controlled terminal setting up a service connection between them, the controlled terminal actively initiates a call by using the stored master control number.

If the master control terminal and/or the controlled terminal are configured to not shield the whole short message network management process, then in the step of a master control terminal and a controlled terminal setting up a service connection between them, a user is prompted that the short message network management process is being carried out in corresponding terminal.

The method further comprises: in the short message network management process, if the master control terminal and/or the controlled terminal receive a calling request initiated by a user, then the master control terminal and/or the controlled terminal terminating the short message network management process and initiating a call according to the calling request.

In the step of initiating a call according to the calling request, serial numbers of the network management short messages sent before terminating the short message network management process are stored;
the method further comprises:
- after the call is finished, the master control terminal and the controlled terminal re-setting up the service connection between them, and resuming subsequent short message network management process by using the stored serial numbers of the network management short messages sent before terminating the short message network management process.

When the controlled terminal receives the calling request initiated by the user and releases the service connection of the short message network management, the step of the master control terminal and the controlled terminal re-setting up the service connection between them comprises:
- after a calling process is finished, the controlled terminal actively calling the controlled terminal; or
- the master control terminal calling the controlled terminal to re-set up the service connection of the short message network management after any time-delay.

When the master control terminal receives the calling request initiated by the user and releases the service connection of the short message network management, the step of the master control terminal and the controlled terminal re-setting up the service connection between them comprises:
- after a calling process is finished, the master control terminal actively calling the controlled terminal; or
- the controlled terminal calling the master control terminal to re-set up the service connection of the short message network management after any time-delay.

The present invention further provides a system for implementing short message network management, and this system comprises a master control apparatus and a controlled apparatus, wherein
- the master control apparatus is configured to set up a service connection with the controlled apparatus through a communication network in carrying out a short message network management process, and send network management short messages to the controlled apparatus through the service connection;
- the controlled apparatus is configured to set up the service connection with the master control apparatus through the communication network, receive the network management short messages sent by the master control apparatus through the service connection, and carry out corresponding processes according to contents of the received network management short messages.

The controlled apparatus is further configured to return a response short message to the master control apparatus through the service connection after carrying out corresponding processes according to the contents of the received network management short messages.

The master control apparatus is further configured to send the network management short messages a plurality of times to the controlled apparatus through the service connection.

The master control apparatus is further configured to release the service connection after the short message network management process is finished.

The master control apparatus is further configured to actively initiate a calling request to the controlled apparatus;
- the controlled apparatus is further configured to return a calling response to the master control apparatus if it is determined that the calling request is initiated by the master control terminal after receiving the calling request.

The controlled apparatus is further configured to determine whether the calling request is initiated by the master control apparatus according to a stored master control number or pre-stored strategies.

The controlled apparatus is further configured to set up the service connection with the master control apparatus by actively initiating a call using a stored master control number.

The master control apparatus is further configured to release the service connection of the short message network management and initiate a call according to a calling request when receiving the calling request of a user in the short message network management process.
The master control apparatus is further configured to store serial numbers of the network management short messages sent before terminating the short message network management process after terminating the short message network management process, and actively call the controlled terminal after the call is finished; or receive a call of the controlled apparatus to set up the service connection after any time-delay, and resume the short message network management process according to the stored serial numbers of the network management short messages sent before terminating the short message network management process.

The controlled apparatus is further configured to release the service connection of the short message network management and initiate a call according to a calling request when receiving the calling request of a user in the short message network management process.

The controlled apparatus is further configured to store serial numbers of the network management short messages sent before terminating the short message network management process after terminating the short message network management process, and actively call the master control apparatus after the call is finished; or receive a call of the master control apparatus to re-set up the service connection of the short message network management after any time-delay, and resume the short message network management process according to the stored serial numbers of the network management short messages sent before terminating the short message network management process.

In the present invention, before the short message network management process every time, both of the master control terminal and controlled terminal have set up service connections with the base station. Since the terminal will not enter into the sleep state in the service connection state, the base station sends the short messages without waiting for the terminal to wake up. The base station and the terminals neither repeat the service connection setup and deletion processes. In the whole short message network management process, the base station and the terminals will send short messages directly through the dedicated uplink and downlink service channels. The time of the short message network management process is saved, and at the same time, since the service connection setup and release process are only carried out once for the short message network management of one user, the consumption of the network signaling resources is also reduced greatly.

### Brief Description of Drawings

FIG. 1 is a schematic diagram of the function of the short message network management in the prior art;
FIG. 2 is a schematic diagram of the short message network management sending shorter short messages in the prior art;
FIG. 3 is a flow chart of the interacting of the network management short messages in the prior art;
FIG. 4 is a flow chart of the method for implementing the short message network management according to the example of the present invention;
FIG. 5 is a flow chart of the method for implementing the short message network management according to the example 1 of the present invention;
FIG. 6 is a flow chart of the method for implementing the short message network management according to the example 2 of the present invention;
FIG. 7 is a structure schematic diagram of the system for the short message network management according to the example of the present invention.

### Preferred Embodiments of the Present Invention

The examples of the present invention provide a method and system for implementing short message network management, and this method comprises: setting up a service connection between a master control terminal and a controlled terminal in the process of carrying out short message network management; the master control terminal sending network management short messages to the controlled terminal through said service connection; and the controlled terminal carrying out corresponding processes according to contents of the received network management short messages.

The examples of the present invention will be further described with reference to the figures below:
As shown in FIG. 4, the example of the present invention provides a method for implementing short message network management, and comprises steps of:
- step 401, in the process of carrying out short message network management, the master control terminal and controlled terminal set up a service connection between them;
- step 402, the master control terminal sends the network management short messages to the controlled terminal through said service connection, and the controlled terminal carries out corresponding processes according to the contents of the received network management short messages;

Besides, in the examples of the present invention, the controlled terminal returns a response short message to the master control terminal through said service connection after carrying out corresponding processes according to the contents of the received network management short messages.

Besides, said master control terminal sends the network management short messages to the controlled terminal a plurality of times through said service connection in carrying out the short message network management process.

Step 403, the setup service connection is released after the short message network management process is finished.

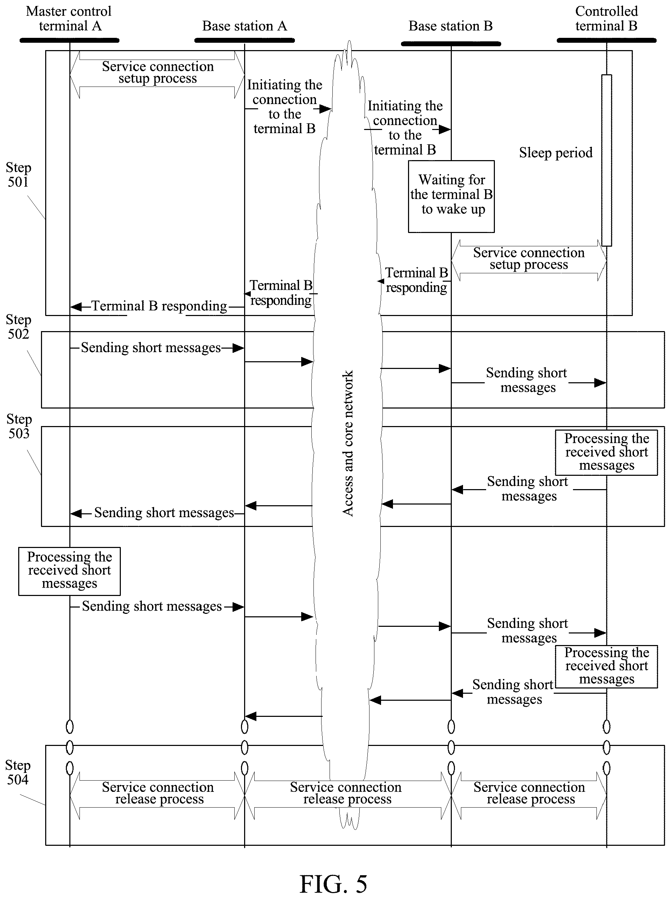

As shown in FIG. 5, example 1 of the present invention, a method for implementing short message network management, particularly comprises:
- step 501, the master control terminal actively initiates a call, and sets up the service connection with the controlled terminal;
- wherein when the step is implemented, it particularly comprises:
   A. the master control terminal initiates a call request of setting up the service connection with the controlled terminal to the base station A;
   B. after receiving said call request, the base station A sends the call request of setting up the service connection to the base station B to which the controlled terminal belongs through the core network;
   C. after receiving said call request, if the controlled terminal is in the sleep state, the base station B waits for the controlled terminal to wake up and sends the call request of setting up said service connection to the controlled terminal;
   D. the controlled terminal authenticates the number of initiating the call according to the preset principles after receiving said call request of setting up the service connection, and if the number is the master control number, then the controlled terminal returns a calling response to the master control terminal, or the controlled terminal carries out the normal incoming call flow.

Furthermore, in said step D, authenticating the number initiating the call according to the preset principles comprises:
- D1. determining whether the number initiating the call is the master control number according to the pre-stored master control number;
- D2. storing the strategies of authenticating whether the call number is the master control number, and determining whether the number initiating the call is the master control number according to the strategies after receiving the call.

In order not to affect the normal use of the user as much as possible, for the call coming from the master control terminal short message network management, the controlled terminal is able to directly respond the call without waiting for the user's response.

Step 502, the master control terminal sends the network management short massages for managing the key parameters to the controlled terminal through said service connection;
Step 503, the controlled terminal receives the network management short messages for managing the key parameters sent by the master control terminal, analyzes the contents of the received short messages according to the pre-defined short message network management communication protocol, processes the analyzed short messages, and returns the short message receiving response.

In the examples of the present invention, processing the analyzed short messages comprises:
for example, the operators should often update information such as the IP access numbers, and rates of different number segment prefixes stored in the terminals and so on due to the update of the network or the changes of the network configurations, and the operators can select the way of updating all information or updating increment information when the information is updated:
- for updating all information, the master control terminal sends the short messages including information such as the whole IP access number, the rate list of different number segment prefixes and so on to the controlled terminal. The controlled terminal stores the corresponding information into its own storage area after receiving such short messages. Then the controlled terminal returns a response short message indicating whether the information update succeeds to the master control terminal.

For updating increment information, the master control terminal sends the short messages of inquiring information such as the current IP access number, and rates of different number segment prefixes and so on to the controlled terminal at first. After receiving such messages, the controlled terminal sends the response short message including the inquired information to the master control terminal. The master control terminal analyzes the information that the controlled terminal already has after receiving such information, and then sends the short messages including the information which requires being updated. The controlled terminal modifies and updates the information already in its own storage area according to the requirement of the master control terminal after receiving the short messages, and sends the response short message indicating whether the modification and the updating succeed to the master control terminal.

Step 504, the master control terminal receives the receiving response returned by the controlled terminal, and releases the setup service connection after the short message network management is finished.

If the master control terminal and/or the controlled terminal receive a user's active calling request in the process of carrying out the short message network management session, then the short message network management process is terminated, and the user's calling request is responded. The service connection between the controlled terminal and the master control terminal is re-set up after the user's active calling is finished, and then the short message network management process is resumed. When resuming the short message network management, the master control terminal or the controlled terminal continue to finish the subsequent short message network management process according to their stored short message serial numbers before being interrupted. Wherein, the master control terminal/controlled terminal can assign one unique serial number identifier for each short message of the short message network management.

Wherein, when the master control terminal receives the user's active calling request, the master control terminal releases the service connection of the short message network management, and re-sets up the service connection between the controlled terminal and the master control terminal after terminating the short message network management process. The above process comprises:
- the master control terminal calling the controlled terminal actively, or the controlled terminal calling the master control terminal again after choosing any time-delay.

Wherein, when the controlled terminal receives the user's active calling request, the controlled terminal terminates the short message network management process, and re-sets up the service connection between the controlled terminal and the master control terminal. The above process comprises:
- the controlled terminal calling the master control terminal actively, or the master control terminal calling the controlled terminal again after choosing any time-delay.

In the examples of the present invention, it can select whether to shield the whole short message network management process for users:
A. shielding the whole process: the controlled terminal (terminal B) does not display the incoming call information of the master control terminal on the user interface, and the interface of the terminal B still displays the standby interface during the short messages interaction, and so on.
B. Prompt the user the short message network management being carried out: the controlled terminal prompts the user, wherein there can be many kinds of prompting modes, for example, the controlled terminal can prompt the users by sound or vibration, the controlled terminal can also display on the interface that the short message network management is being carried out, and so on.

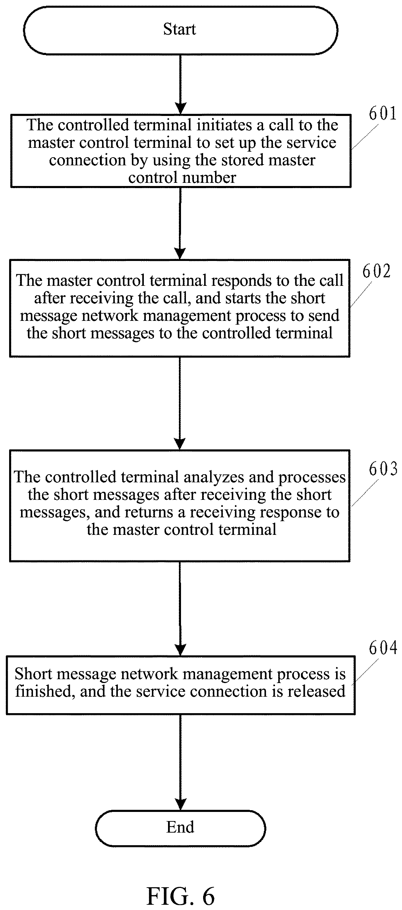

As shown in FIG. 6, example 2 of the present invention provides a method for implementing short message network management. In this method, the controlled terminal has stored the master control number of the short message network management. This method comprises steps of:
- step 601, the controlled terminal initiates a call to the master control terminal by means of the stored master control number;
- step 602, the master control terminal receives the call, responds to the call, sets up the service connection, and sends the short messages for managing the key parameters to the controlled terminal through this service connection;
- step 603, the controlled terminal receives the short messages for managing the key parameters sent by the master control terminal, analyzes the contents of the received short messages according to the pre-defined short message network management communication protocol, processes the analyzed short messages, and returns a short message receiving response to the master control terminal;
- step 604, the master control terminal receives the short message receiving response returned by the master control terminal, and releases the service connection after the short messages interaction is finished (namely after the short message network management process is finished).

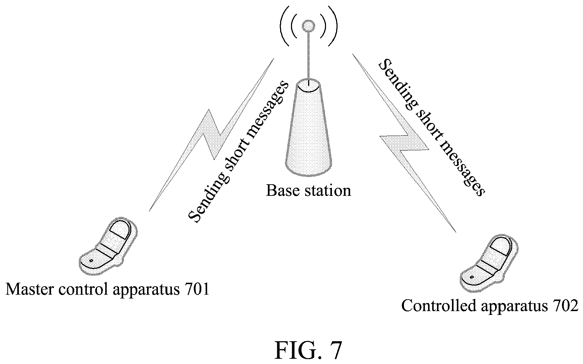

As shown in FIG. 7, the example of the present invention further provides a system for short message network management, and the system particularly comprises a master control apparatus 701 and a controlled apparatus 702:
- the master control apparatus 701 is for setting up a service connection with the controlled apparatus 702 through the communication network carrying out the short message network management process, and sending the network management short messages to the controlled apparatus 702 through said service connection;
- said master control apparatus 701 is further for sending the network management short messages a plurality of times to the controlled apparatus through said service connection.

Said master control apparatus 701 is further for releasing said service connection after the short message network management is finished.
Wherein, said master control apparatus 701 is further for terminating the short message network management process when the calling request of the user is received in the short message network management process, and initiating the call according to said calling request.

Furthermore, this master control apparatus 701 is further for storing the serial numbers of the network management short messages sent before terminating the short message network management process after terminating the short message network management process, and actively calling the controlled apparatus 702 after said call is finished, or receiving the call of the controlled apparatus 702 to set up the service connection after any time-delay, and resuming the short message network management process according to the stored serial numbers of the network management short messages sent before terminating the short message network management process.

The controlled apparatus 702 is for setting up the service connection with the master control apparatus 701 through the communication network, receiving the network management short messages sent by the master control apparatus 701 through said service connection, and carrying out the corresponding processes according to the contents of the received network management short messages.

The controlled apparatus 702 is further for returning the response short message to the master control apparatus 701 through said service connection after carrying out the corresponding processes according to the contents of the received network management short messages.

If this controlled apparatus 702 has stored the master control number, then this controlled apparatus 702 is further for initiating a call by using the stored master control number, and setting up the service connection with said master control apparatus 701.

Said controlled apparatus 702 is further for terminating the receiving of the network management short message when the calling request of the user is received in the short message network management process, and initiating a call according to the calling request.

Furthermore, this controlled apparatus 702 is further for storing the serial numbers of the network management short messages sent before terminating the short message network management process after the terminating the short message network management process, and actively calling the master control apparatus 701 after said call is finished, or receiving the call of the master control apparatus 701 and re-setting up the service connection of the short message network management after any time-delay, and resuming the short message network management process according to the stored serial numbers of the network management short messages sent before terminating the short message network management process.

Wherein, said master control apparatus 701 is further for actively initiating a calling request to the controlled apparatus;
said controlled apparatus 702 is further for returning a calling response to said master control apparatus if it is determined that said calling request is initiated by the master control apparatus after receiving said calling request.

Furthermore, said controlled apparatus 702 is further for determining whether said calling request is initiated by the master control apparatus according to the stored master control number or the pre-stored strategies.

The controlled apparatus differently processes the short message according to the different contents of the received short messages. For example:
A. when the master control apparatus inquires the access number segment information of the controlled apparatus, the master control apparatus will send short messages of inquiring the access number segment rate information to the controlled apparatus. The controlled apparatus will read the access number segment rate list from its own storage area after receiving the short messages, and report the list information to the master control apparatus in the response short message.
B. When the master control apparatus updates the IP access code information of the controlled apparatus, the master control apparatus will send a short message of writing the IP access code to the controlled apparatus. The controlled apparatus will write the access code in the short message into its own storage area after receiving the short message, and sends the response message of whether the writing succeeds to the master control apparatus. Certainly, here only illustrates an example, and actually the short message network management process can be very flexible.

The above is two particular embodiments provided by examples of the present invention, and the applicable ways in the application are not limited to the above two embodiments.
Adopting the method proposed in the present invention, before the short message network management process every time, the service connection between the master control terminal and the controlled terminal is set up. Since the terminals will not enter into the sleep state during the service connection state, the base station need not wait for the terminals waking up to send the short messages. The base station and the terminals need not repeat the setup and deletion processes of the service connection. Thus the base station and the terminals will send the short messages directly through the dedicated uplink and downlink service channel in the subsequent whole short message network management process. A lot of time in the user's short message network management process is saved. At the same time, since the service connection setup and release processes are only carried out once for one user's short message network management, the consumption of the network signaling resources is also reduced greatly.

The method of the present invention is not limited to said examples in the preferred embodiments, and a person having ordinary skills in the art can obtain other embodiments according to the technical scheme of the present invention, and all of these belong to the technical innovation scope of the present invention. Obviously, a person having ordinary skills in the art can make modifications and transformations. Thus if such modifications and transformations of the present invention belong to the scope of the claims of the present invention and its substitution technique, the present invention also intends to include these modifications and transformations.

### Industrial Applicability

In the present invention, before the process of short message network management every time, the master control terminal and the controlled terminal both have set up the service connections with the base station. Since the terminal will not enter into the sleep state in the service connection state, the base station need not wait for the terminals waking up to send the short messages. The base station and the terminals need not repeat the service connection setup and deletion processes. In the whole short message network management process, the base station and the terminals will send the short messages directly through the dedicated uplink and downlink service channels. The time of the short message network management process is saved, and at the same time, since the service connection setup and release process are only carried out once for one user's short message network management of, the consumption of the network signaling resources is also reduced greatly.

## Claims

1. A method for implementing short message network management, comprising:
a master control terminal and a controlled terminal setting up a service connection between them in carrying out a short message network management process (401);
the master control terminal sending network management short messages to the controlled terminal through the service connection (402); and
the controlled terminal carrying out corresponding processes according to contents of the received network management short messages (402);
**characterized by** that
the method further comprises: in the short message network management process, if the master control terminal and/or the controlled terminal receive a calling request initiated by a user, then the master control terminal and/or the controlled terminal terminating the short message network management process and initiating a call according to the calling request;
wherein in the step of initiating a call according to the calling request, serial numbers of the network management short messages sent before terminating the short message network management process are stored;
the method further comprises:
after the call is finished, the master control terminal and the controlled terminal re-setting up the service connection between them, and resuming subsequent short message network management process by using the stored serial numbers of the network management short messages sent before terminating the short message network management process.

2. The method as claimed in claim 1, wherein after the step of the controlled terminal carrying out corresponding processes according to contents of the received network management short messages, the method further comprises:
the controlled terminal returning a response short message to the master control terminal through the service connection.

3. The method as claimed in claim 1, wherein in the step of the master control terminal sending network management short messages to the controlled terminal through the service connection, the master control terminal sends the network management short messages a plurality of times to the controlled terminal through the service connection.

4. The method as claimed in claim 1, wherein the step of a master control terminal and a controlled terminal setting up a service connection between them comprises:
the master control terminal actively initiating a calling request to the controlled terminal; and
after the controlled terminal receiving the calling request, if it is determined that the calling request is initiated by the master control terminal, then the controlled terminal returning a calling response to the master control terminal to accomplish setup of the service connection;
and the method further comprises: the controlled terminal determining whether the calling request is initiated by the master control terminal according to a stored master control number or pre-stored strategies.

5. The method as claimed in claim 1, wherein when the master control terminal has stored a master control number, in the step of a master control terminal and a controlled terminal setting up a service connection between them, the controlled terminal actively initiates a call by using the stored master control number.

6. The method as claimed in claim 1, wherein if the master control terminal and/or the controlled terminal are configured to not shield the whole short message network management process, then in the step of a master control terminal and a controlled terminal setting up a service connection between them, a user is prompted that the short message network management process is being carried out in corresponding terminal.

7. The method as claimed in claim 1, wherein when the controlled terminal receives the calling request initiated by the user and releases the service connection of the short message network management, the step of the master control terminal and the controlled terminal re-setting up the service connection between them comprises:
after a calling process is finished, the controlled terminal actively calling the controlled terminal; or
the master control terminal calling the controlled terminal to re-set up the service connection of the short message network management after any time-delay;
when the master control terminal receives the calling request initiated by the user and releases the service connection of the short message network management, the step of the master control terminal and the controlled terminal re-setting up the service connection between them comprises:
after a calling process is finished, the master control terminal actively calling the controlled terminal; or
the controlled terminal calling the master control terminal to re-set up the service connection of the short message network management after any time-delay.

8. A system for implementing short message network management, comprising a master control apparatus (701) and a controlled apparatus (702), wherein
the master control apparatus (701) is configured to set up a service connection with the controlled apparatus (702) through a communication network in carrying out a short message network management process, and send network management short messages to the controlled apparatus (702) through the service connection;
the controlled apparatus (702) is configured to set up the service connection with the master control apparatus (701) through the communication network, receive the network management short messages sent by the master control apparatus (701) through the service connection, and carry out corresponding processes according to contents of the received network management short messages; **characterized by** that
the controlled apparatus (702) is further configured to release the service connection of the short message network management and initiate a call according to a calling request when receiving the calling request of a user in the short message network management process; and the controlled apparatus (702) is further configured to store serial numbers of the network management short messages sent before terminating the short message network management process after terminating the short message network management process, and actively call the master control apparatus (701) after the call is finished; or receive a call of the master control apparatus (701) to re-set up the service connection of the short message network management after any time-delay, and resume the short message network management process according to the stored serial numbers of the network management short messages sent before terminating the short message network management process.

9. The system as claimed in claim 8, wherein the controlled apparatus (702) is further configured to return a response short message to the master control apparatus (701) through the service connection after carrying out corresponding processes according to the contents of the received network management short messages; or the master control apparatus (701) is further configured to send the network management short messages a plurality of times to the controlled apparatus (702) through the service connection.

10. The system as claimed in claim 8, wherein the master control apparatus (701) is further configured to actively initiate a calling request to the controlled apparatus (702);
the controlled apparatus is further configured to return a calling response to the master control apparatus (701) if it is determined that the calling request is initiated by the master control terminal after receiving the calling request;
and the controlled apparatus (702) is further configured to determine whether the calling request is initiated by the master control apparatus (701) according to a stored master control number or pre-stored strategies.

11. The system as claimed in claim 8, wherein the controlled apparatus (702) is further configured to set up the service connection with the master control apparatus (701) by actively initiating a call using a stored master control number.

12. The system as claimed in claim 8, wherein the master control apparatus (701) is further configured to release the service connection of the short message network management and initiate a call according to a calling request when receiving the calling request of a user in the short message network management process;
and the master control apparatus (701) is further configured to store serial numbers of the network management short messages sent before terminating the short message network management process after terminating the short message network management process, and actively call the controlled terminal after the call is finished; or receive a call of the controlled apparatus (702) to set up the service connection after any time-delay, and resume the short message network management process according to the stored serial numbers of the network management short messages sent before terminating the short message network management process.

## Patentansprüche

1. Verfahren zum Umsetzen von Kurznachrichten-Netzwerkmanagement, das Folgendes umfasst:
ein Mastersteuerendgerät und ein gesteuertes Endgerät, die einen Serviceanschluss zwischen einander herstellen, indem sie einen Kurznachrichten-Netzwerkmanagementprozess (401) ausführen;
wobei das Mastersteuerendgerät Netzwerkmanagement-Kurznachrichten zu dem gesteuerten Endgerät durch den Serviceanschluss sendet (402), und
das gesteuerte Endgerät entsprechende Prozesse gemäß Inhalten der empfangenen Netzwerkmanagement-Kurznachrichten ausführt (402);
**dadurch gekennzeichnet, dass**
das Verfahren ferner umfasst, dass: bei dem Kurznachrichten-Netzwerkmanagementprozess, falls das Mastersteuerendgerät und/oder das gesteuerte Endgerät eine Anrufanfrage empfangen, die von einem Benutzer initiiert wird, das Mastersteuerendgerät und/oder das gesteuerte Endgerät den Kurznachrichten-Netzwerkmanagementprozess beenden und einen Anruf gemäß der Anrufanfrage initiieren;
wobei bei dem Schritt des Initiierens eines Anrufs gemäß der Anrufanfrage Seriennummern der Netzwerkmanagement-Kurznachrichten, die gesendet werden, bevor der Kurznachrichten-Netzwerkmanagementprozess beendet wird, gespeichert werden;
wobei das Verfahren ferner Folgendes umfasst:
nach dem Beenden des Anrufs richten das Mastersteuerendgerät und
das gesteuerte Endgerät den Serviceanschluss zwischen einander wieder ein und nehmen darauffolgenden Kurznachrichten-Netzwerkmanagementprozess wieder auf, indem sie die gespeicherten Seriennummern der Netzwerkmanagement-Kurznachrichten verwenden, die vor dem Beenden des Kurznachrichten-Netzwerkmanagementprozesses gesendet wurden.

2. Verfahren nach Anspruch 1, wobei nach dem Schritt, bei dem das gesteuerte Endgerät entsprechende Prozesse gemäß Inhalten der empfangenen Netzwerkmanagement-Kurznachrichten ausführt, das Verfahren ferner Folgendes umfasst:
das gesteuerte Endgerät sendet eine Antwortkurznachricht zu dem Mastersteuerendgerät durch den Serviceanschluss zurück.

3. Verfahren nach Anspruch 1, wobei bei dem Schritt, bei dem das Mastersteuerendgerät Netzwerkmanagement-Kurznachrichten zu dem gesteuerten Endgerät durch den Serviceanschluss sendet, das Mastersteuerendgerät die Netzwerkmanagement-Kurznachrichten mehrmals zu dem gesteuerten Endgerät durch den Serviceanschluss sendet.

4. Verfahren nach Anspruch 1, wobei der Schritt des Einrichtens eines Serviceanschlusses durch ein Mastersteuerendgerät und ein gesteuertes Endgerät zwischen einander Folgendes umfasst:
das Mastersteuerendgerät initiiert aktiv eine Anrufanfrage zu dem gesteuerten Endgerät, und
nachdem das gesteuerte Endgerät die Anrufanfrage empfangen hat, falls bestimmt wird, dass die Anrufanfrage von dem Mastersteuerendgerät initiiert wurde, sendet das gesteuerte Endgerät eine Anrufantwort zu dem Mastersteuerendgerät zurück, um das Einrichten des Serviceanschlusses zu vollenden;
und das Verfahren ferner Folgendes umfasst: das gesteuerte Endgerät bestimmt, ob die Anrufanfrage von dem Mastersteuerendgerät gemäß einer gespeicherten Mastersteuernummer oder vorab gespeicherten Strategien initiiert wird.

5. Verfahren nach Anspruch 1, wobei, wenn das Mastersteuerendgerät eine Mastersteuernummer gespeichert hat, das gesteuerte Endgerät bei dem Schritt, bei dem ein Mastersteuerendgerät und ein gesteuertes Endgerät einen Serviceanschluss zwischen einander einrichten, aktiv einen Anruf durch Verwenden der gespeicherten Mastersteuernummer initiiert.

6. Verfahren nach Anspruch 1, wobei, falls das Mastersteuerendgerät und/oder das gesteuerte Endgerät konfiguriert sind, um nicht den gesamten Kurznachrichten-Netzwerkmanagementprozess abzuschirmen, ein Benutzer bei dem Schritt, bei dem ein Mastersteuerendgerät und ein gesteuertes Endgerät einen Serviceanschluss zwischen einander einrichten, informiert wird, dass der Kurznachrichten-Netzwerkmanagementprozess in dem entsprechenden Endgerät ausgeführt wird.

7. Verfahren nach Anspruch 1, wobei, wenn das gesteuerte Endgerät die Anrufanfrage empfängt, die von dem Benutzer initiiert wird, und den Serviceanschluss des Kurznachrichten-Netzwerkmanagements freigibt, der Schritt, bei dem das Mastersteuerendgerät und das gesteuerte Endgerät den Serviceanschluss zwischen einander wieder einrichten, Folgendes umfasst:
nach dem Beenden eines Anrufprozesses ruft das gesteuerte Endgerät aktiv das gesteuerte Endgerät an, oder
das Mastersteuerendgerät ruft das gesteuerte Endgerät an, um den Serviceanschluss des Kurznachrichten-Netzwerkmanagements nach einer Zeitverzögerung wieder einzurichten;
wenn das Mastersteuerendgerät die Anrufanfrage empfängt, die von dem Benutzer initiiert wird, und den Serviceanschluss des Kurznachrichten-Netzwerkmanagements freigibt, der Schritt, bei dem das Mastersteuerendgerät und das gesteuerte Endgerät den Serviceanschluss zwischen einander wieder einrichten, Folgendes umfasst:
nach dem Beenden eines Anrufprozesses ruft das Mastersteuerendgerät aktiv das gesteuerte Endgerät an, oder
das gesteuerte Endgerät ruft das Mastersteuerendgerät an, um den Serviceanschluss des Kurznachrichten-Netzwerkmanagements nach einer Zeitverzögerung wieder einzurichten.

8. System zum Umsetzen von Kurznachrichten-Netzwerkmanagement, das ein Mastersteuergerät (701) und ein gesteuertes Gerät (702) umfasst, wobei
das Mastersteuergerät (701) konfiguriert ist, um einen Serviceanschluss mit dem gesteuerten Gerät (702) durch ein Kommunikationsnetzwerk einzurichten, indem ein Kurznachrichten-Netzwerkmanagementprozess ausgeführt wird, und um Netzwerkmanagement-Kurznachrichten zu dem gesteuerten Gerät (702) durch den Serviceanschluss zu senden;
das gesteuerte Gerät (702) konfiguriert ist, um den Serviceanschluss mit dem Mastersteuergerät (701) durch das Kommunikationsnetzwerk einzurichten, die Netzwerkmanagement-Kurznachrichten, die von dem Mastersteuergerät (701) durch den Serviceanschluss gesendet werden, zu empfangen, und entsprechende Prozesse gemäß Inhalten der empfangenen Netzwerkmanagement-Kurznachrichten auszuführen;
**dadurch gekennzeichnet, dass**
das gesteuerte Gerät (702) ferner konfiguriert ist, um den Serviceanschluss des Kurznachrichten-Netzwerkmanagements freizugeben und einen Anruf gemäß einer Anrufanfrage zu initiieren, wenn die Anrufanfrage eines Benutzers in dem Kurznachrichten-Netzwerkmanagementprozess empfangen wird;
und das gesteuerte Gerät (702) weiter konfiguriert ist, um Seriennummern der Netzwerkmanagement-Kurznachrichten, die vor dem Beenden des Kurznachrichten-Netzwerkmanagementprozesses gesendet wurden, nach dem Beenden des Kurznachrichten-Netzwerkmanagementprozesses zu speichern und das Mastersteuergerät (701) nach dem Beenden des Anrufs aktiv anzurufen; oder einen Anruf des Mastersteuergeräts (701) zu empfangen, um den Serviceanschluss des Kurznachrichten-Netzwerkmanagements nach einer Zeitverzögerung wieder einzurichten, und den Kurznachrichten-Netzwerkmanagementprozess gemäß den gespeicherten Seriennummern der Netzwerkmanagement-Kurznachrichten, die vor dem Beenden des Kurznachrichten-Netzwerkmanagementprozesses gesendet wurden, wieder aufzunehmen.

9. System nach Anspruch 8, wobei das gesteuerte Gerät (702) ferner konfiguriert ist, um eine Antwortkurznachricht zu dem Mastersteuergerät (701) durch den Serviceanschluss zurückzusenden, nachdem entsprechende Prozesse gemäß den Inhalten der empfangenen Netzwerkmanagement-Kurznachrichten ausgeführt wurden, oder das Mastersteuergerät (701) ferner konfiguriert ist, um die Netzwerkmanagement-Kurznachrichten mehrmals zu dem gesteuerten Gerät (702) durch den Serviceanschluss zu senden.

10. System nach Anspruch 8, wobei das Mastersteuergerät (701) ferner konfiguriert ist, um aktiv eine Anrufanfrage zu dem gesteuerten Gerät (702) zu initiieren;
das gesteuerte Gerät ferner konfiguriert ist, um eine Anrufantwort zu dem Mastersteuergerät (701) zurückzusenden, falls bestimmt wird, dass die Anrufanfrage von dem Mastersteuerendgerät initiiert wird, nachdem die Anrufanfrage empfangen wurde;
und das gesteuerte Endgerät (702) weiter konfiguriert ist, um zu bestimmen, ob die Anrufanfrage von dem Mastersteuerendgerät (701) gemäß einer gespeicherten Mastersteuernummer oder vorab gespeicherten Strategien initiiert wird.

11. System nach Anspruch 8, wobei das gesteuerte Gerät (702) ferner konfiguriert ist, um den Serviceanschluss mit dem Mastersteuergerät (701) durch aktives Initiieren eines Anrufs unter Verwenden einer gespeicherten Mastersteuernummer einzurichten.

12. System nach Anspruch 8, wobei das Mastersteuergerät (701) weiter konfiguriert ist, um den Serviceanschluss des Kurznachrichten-Netzwerkmanagements freizugeben und einen Anruf gemäß einer Anrufanfrage zu initiieren, wenn die Anrufanfrage eines Benutzers in dem Kurznachrichten-Netzwerkmanagementprozess empfangen wird; und das Mastersteuergerät (701) weiter konfiguriert ist, um Seriennummern der Netzwerkmanagement-Kurznachrichten, die vor dem Beenden des Kurznachrichten-Netzwerkmanagementprozesses gesendet werden, nach dem Beenden des Kurznachrichten-Netzwerkmanagementprozesses zu speichern, und das gesteuerte Endgerät nach dem Beenden des Anrufs aktiv anzurufen; oder einen Anruf des gesteuerten Geräts (702) zu empfangen, um nach einer beliebigen Zeitverzögerung den Serviceanschluss einzurichten und den Kurznachrichten-Netzwerkmanagementprozess gemäß den gespeicherten Seriennummern der Netzwerkmanagement-Kurznachrichten, die vor dem Beenden des Kurznachrichten-Netzwerkmanagementprozesses gesendet wurden, wieder aufzunehmen.

## Revendications

1. Procédé d'implémentation de gestion de réseau de message court, comprenant:
l'établissement par un terminal de commande maître et un terminal commandé d'une connexion de service entre eux pour réaliser un processus de gestion de réseau de message court (401);
l'envoi par le terminal de commande maître de messages courts de gestion de réseau au terminal commandé par l'intermédiaire de la connexion de service (402); et
la réalisation par le terminal commandé de processus correspondants selon des contenus des messages courts de gestion de réseau reçus (402);
**caractérisé en ce que**
le procédé comprend en outre: dans le processus de gestion de réseau de message court, si le terminal de commande maître et/ou le terminal commandé reçoivent une demande d'appel lancée par un utilisateur,
alors la fin par le terminal de commande maître et/ou le terminal commandé du processus de gestion de réseau de message court et le lancement d'un appel selon la demande d'appel;
dans lequel, à l'étape de lancement d'un appel selon la demande d'appel, des numéros de série des messages courts de gestion de réseau envoyés avant de mettre fin au processus de gestion de réseau de message court sont stockés;
le procédé comprend en outre:
après que l'appel est terminé, le rétablissement par le terminal de commande maître et le terminal commandé de la connexion de service entre eux, et la reprise d'un processus de gestion de réseau de message court suivant en utilisant les numéros de série stockés des messages courts de gestion de réseau envoyés avant de mettre fin au processus de gestion de réseau de message court.

2. Procédé selon la revendication 1, dans lequel après l'étape de réalisation par le terminal commandé de processus correspondants selon les contenus des messages courts de gestion de réseau reçus, le procédé comprend en outre:
le renvoi par le terminal commandé d'un message court de réponse au terminal de commande maître par l'intermédiaire de la connexion de service.

3. Procédé selon la revendication 1, dans lequel, à l'étape d'envoi par le terminal de commande maître de messages courts de gestion de réseau au terminal commandé par l'intermédiaire de la connexion de service, le terminal de commande maître envoie les messages courts de gestion de réseau une pluralité de fois au terminal commandé par l'intermédiaire de la connexion de service.

4. Procédé selon la revendication 1, dans lequel l'étape d'établissement, par un terminal de commande maître et un terminal commandé, d'une connexion de service entre eux comprend:
le lancement actif par le terminal de commande maître d'une demande d'appel au terminal commandé; et
après la réception par le terminal commandé de la demande d'appel, s'il est déterminé que la demande d'appel est lancée par le terminal de commande maître, alors le renvoi par le terminal commandé d'une réponse d'appel au terminal de commande maître pour accomplir l'établissement de la connexion de service;
et le procédé comprend en outre: le fait de déterminer par le terminal commandé si la demande d'appel est lancée par le terminal de commande maître selon un numéro de commande maître stocké ou des stratégies pré-stockées.

5. Procédé selon la revendication 1, dans lequel, lorsque le terminal de commande maître a stocké un numéro de commande maître, à l'étape d'établissement par un terminal de commande maître et un terminal commandé d'une connexion de service entre eux, le terminal commandé lance activement un appel en utilisant le numéro de commande maître stocké.

6. Procédé selon la revendication 1, dans lequel, si le terminal de commande maître et/ou le terminal commandé sont configurés pour ne pas protéger le processus de gestion de réseau de message court entier, alors à l'étape d'établissement par un terminal de commande maître et un terminal commandé d'une connexion de service entre eux, un utilisateur est invité pour que le processus de gestion de réseau de message court soit réalisé dans un terminal correspondant.

7. Procédé selon la revendication 1, dans lequel, lorsque le terminal commandé reçoit la demande d'appel lancée par l'utilisateur et libère la connexion de service de la gestion de réseau de message court, l'étape de rétablissement par le terminal de commande maître et le terminal commandé de la connexion de service entre eux comprend:
après qu'un processus d'appel est terminé, l'appel actif par le terminal commandé du terminal commandé; ou
l'appel par le terminal de commande maître du terminal commandé pour rétablir la connexion de service de la gestion de réseau de message court après tout retard;
lorsque le terminal de commande maître reçoit la demande d'appel lancée par l'utilisateur et libère la connexion de service de la gestion de réseau de message court, l'étape de rétablissement par le terminal de commande maître et le terminal commandé de la connexion de service entre eux comprend:
après qu'un processus d'appel est terminé, l'appel actif par le terminal de commande maître du terminal commandé; ou
l'appel par le terminal commandé du terminal de commande maître pour rétablir la connexion de service de la gestion de réseau de message court après tout retard.

8. Système d'implémentation de gestion de réseau de message court, comprenant un appareil de commande maître (701) et un appareil commandé (702), dans lequel
l'appareil de commande maître (701) est configuré pour établir une connexion de service avec l'appareil commandé (702) par l'intermédiaire d'un réseau de communication en réalisant un processus de gestion de réseau de message court, et envoyer des messages courts de gestion de réseau à l'appareil commandé (702) par l'intermédiaire de la connexion de service;
l'appareil commandé (702) est configuré pour établir la connexion de service avec l'appareil de commande maître (701) par l'intermédiaire du réseau de communication, recevoir les messages courts de gestion de réseau envoyés par l'appareil de commande maître (701) par l'intermédiaire de la connexion de service, et réaliser des processus correspondants selon des contenus des messages courts de gestion de réseau reçus;
**caractérisé en ce que**
l'appareil commandé (702) est en outre configuré pour libérer la connexion de service de la gestion de réseau de message court et lancer un appel selon une demande d'appel lorsqu'il reçoit la demande d'appel d'un utilisateur dans le processus de gestion de réseau de message court; et l'appareil commandé (702) est en outre configuré pour stocker des numéros de série des messages courts de gestion de réseau envoyés avant de mettre fin au processus de gestion de réseau de message court après avoir mis fin au processus de gestion de réseau de message court, et appeler activement l'appareil de commande maître (701) après que l'appel est terminé; ou recevoir un appel de l'appareil de commande maître (701) pour rétablir la connexion de service de la gestion de réseau de message court après tout retard, et reprendre le processus de gestion de réseau de message court selon les numéros de série stockés des messages courts de gestion de réseau envoyés avant de mettre fin au processus de gestion de réseau de message court.

9. Système selon la revendication 8, dans lequel l'appareil commandé (702) est en outre configuré pour renvoyer un message court de réponse à l'appareil de commande maître (701) par l'intermédiaire de la connexion de service après avoir réalisé des processus correspondants selon les contenus des messages courts de gestion de réseau reçus; ou l'appareil de commande maître (701) est en outre configuré pour envoyer les messages courts de gestion de réseau une pluralité de fois à l'appareil commandé (702) par l'intermédiaire de la connexion de service.

10. Système selon la revendication 8, dans lequel l'appareil de commande maître (701) est en outre configuré pour lancer activement une demande d'appel à l'appareil commandé (702);
l'appareil commandé est en outre configuré pour renvoyer une réponse d'appel à l'appareil de commande maître (701) s'il est déterminé que la demande d'appel est lancée par le terminal de commande maître après avoir reçu la demande d'appel;
et l'appareil commandé (702) est en outre configuré pour déterminer si la demande d'appel est lancée par l'appareil de commande maître (701) selon un numéro de commande maître stocké ou des stratégies pré-stockées.

11. Système selon la revendication 8, dans lequel l'appareil commandé (702) est en outre configuré pour établir la connexion de service avec l'appareil de commande maître (701) en lançant activement un appel à l'aide d'un numéro de commande maître stocké.

12. Système selon la revendication 8, dans lequel l'appareil de commande maître (701) est en outre configuré pour libérer la connexion de service de la gestion de réseau de message court et lancer un appel selon une demande d'appel lorsqu'il reçoit la demande d'appel d'un utilisateur dans le processus de gestion de réseau de message court;
et l'appareil de commande maître (701) est en outre configuré pour stocker des numéros de série des messages courts de gestion de réseau envoyés avant de mettre fin au processus de gestion de réseau de message court après avoir mis fin au processus de gestion de réseau de message court, et appeler activement le terminal commandé après que l'appel est terminé; ou recevoir un appel de l'appareil commandé (702) pour établir la connexion de service après tout retard, et reprendre le processus de gestion de réseau de message court selon les numéros de série stockés des messages courts de gestion de réseau envoyés avant de mettre fin au processus de gestion de réseau de message court.
